# EUROPÄISCHE PATENTANMELDUNG

(11) **EP 2 594 986 A2**
(43) Veröffentlichungstag der Anmeldung: **22.05.2013**
(21) Anmeldenummer: 12005837.5
(22) Anmeldetag: 11.08.2012
(51) Int. Cl.: G02B 27/01

(54) **Verfahren zum Bereitstellen einer Darstellung in einem Kraftfahrzeug abhängig von einer Blickrichtung eines Fahrzeugführers**

(30) Priorität: 07.09.2011 DE 102011112717
(71) Anmelder: Audi AG, 85045 Ingolstadt (DE)
(72) Erfinder: Giesler, Björn, 85055 Ingolstadt (DE); Kölzow, Thorsten, 85051 Ingolstadt (DE); Jakobs, Bernd, 90453 Nürnberg (DE)
(74) Vertreter: Thielmann, Frank

(57) **Zusammenfassung**

In einem Kraftfahrzeug wird den physiologischen Gegebenheiten des Auges dadurch besonders gut Rechnung getragen, dass eine Darstellung an einem Darstellungsort aus zumindest zwei Darstellungsarten in Abhängigkeit davon ausgewählt wird, ob der jeweilige Darstellungsort in einem zentralen Blickfeld (26) des Fahrzeugführers (16) liegt oder in einem peripheren Blickfeld (28a, 28b) des Fahrzeugführers liegt. Im zentralen Blickfeld (26) des Fahrzeugführers (16) wählt man bevorzugt intensive Farben und starke Farbkontraste, im peripheren Blickfeld (28a, 28b) zeitlich veränderliche Darstellungen.

## Beschreibung

Die Erfindung betrifft ein Verfahren zum Bereitstellen einer Darstellung an zumindest einem Darstellungsort in einem Kraftfahrzeug. Ein solcher Darstellungsort kann eine eigens für die Darstellung bereitgestellte Anzeigeeinrichtung wie z. B. ein Bildschirm bzw. Display sein oder eine Mehrzahl von Leuchtdioden, der Darstellungsort kann jedoch auch eine Projektionsfläche sein, wobei sich hierbei insbesondere die Windschutzscheibe für ein so genanntes Head-up-Display eignet.

Aus der DE 10 2005 058 018 A1 ist es bekannt, ein solches Head-up-Display bei Erfassung der Blickrichtung des Fahrzeugführers gezielt in das Blickfeld des Betrachters zu emittieren. Insbesondere soll hierbei eine Sichtunterstützung bereitgestellt werden: Elemente werden derart gezielt in das Blickfeld des Betrachters emittiert, dass sie sich mit den jeweiligen realen Objekten in Überdeckung befinden. Dies ist dadurch möglich, dass eine Umgebungssensorik Informationen über reale Objekte der Umgebung aufnimmt.

Die DE 10 2007 025 531 A1 betrifft ein blickrichtungsgesteuertes Anzeigesystem und -verfahren, bei dem die Darstellung davon abhängig ist, ob der Betrachter seinen Blick zugewendet hat oder vollständig abgewendet hat. Mit zunehmlicher Warnungsdringlichkeit können bestimmte Darstellungsformen bevorzugt werden, zu denen die Darstellung mit einer gemäß einer vorgegebenen Farbskala als besser wahrnehmbar eingestuften Farbe und eine zeitlich periodisch veränderliche Darstellung gehören.

Insbesondere das Bereitstellen von solchen Head-up-Anzeigen in Kraftfahrzeugen, durch die der Fahrzeugführer auf reale Objekte außerhalb des Kraftfahrzeugs aufmerksam gemacht wird, sind Gegenstand aktueller Entwicklungen, vergleiche auch die DE 10 2005 020 772 A1 und die DE 10 2009 003 220 A1.

Ein stets bestehendes Problem besteht darin, den Fahrzeugführer auf bestimmte Objekte verstärkt und besonders schnell aufmerksam zu machen.

Es ist eine Aufgabe der vorliegenden Erfindung, einen Weg aufzuzeigen, wie eine Darstellung bereitgestellt werden kann, damit der Fahrzeugführer diese besonders schnell und aufmerksam wahrnimmt.

Die Aufgabe wird in einem Aspekt durch ein Verfahren mit den Merkmalen gemäß Patentanspruch 1 gelöst und in einem anderen Aspekt durch ein Kraftfahrzeug mit den Merkmalen gemäß Patentanspruch 7 gelöst.

Bei dem erfindungsgemäßen Verfahren wird somit eine Blickrichtung eines Fahrzeugführers erfasst und die Darstellung aus zumindest zwei Darstellungsarten in Abhängigkeit davon ausgewählt, ob der jeweilige Darstellungsort in einem (anhand der erfassten Blickrichtung ableitbaren) zentralen Blickfeld des Fahrzeugführers liegt oder in einem (ebenfalls anhand der erfassten Blickrichtung abgeleiteten) peripheren Blickfeld des Fahrzeugführers liegt.

Die Erfindung ermöglicht es, die Darstellung an die physiologischen Gegebenheiten des menschlichen Auges anzupassen: Im zentralen Blickfeld ist der Betrachter besonders empfänglich für bestimmte Farben, die demgemäß bevorzugt dann in stärkerem Maße eingesetzt werden, wenn der Darstellungsort im zentralen Blickfeld liegt, als wie wenn er im peripheren Blickfeld liegt. Im peripheren Blickfeld ist der Betrachter besonders gut in der Lage, Bewegungen wahrzunehmen, sodass bevorzugt im peripheren Blickfeld des Fahrzeugführers als Darstellungsart eine zeitlich veränderliche Darstellung vorgesehen wird, zum Beispiel über eine Periode mit der Zeit variierenden Intensität, ggf. in Form einer sich über die Anzeigefläche erstreckenden Welle, zum Beispiel ein Zittern eines projizierten Bildes, ein sich Aufblähen und wieder Zusammenziehen eines projizierten Bildes o. ä.

Diese bevorzugten Darstellungsarten ermöglichen es somit, den Fahrzeugführer besonders gut zu unterstützen, damit er möglichst viel von der Darstellung wahrnimmt und das Ziel der Darstellung besonders gut erreicht wird.

Das erfindungsgemäße Verfahren kann in unterschiedlichen Zusammenhängen eingesetzt werden. So kann vorgesehen sein, dass die Blickrichtung des Fahrzeugführers selbst den Darstellungsort von zumindest einer Darstellung bestimmt. Mit anderen Worten wandert - wie an sich bekannt - die Darstellung mit dem Blick des Fahrzeugführers mit, dabei aber werden die im jeweiligen zentralen Blickfeld des Fahrzeugführers liegenden Darstellungsbereiche bzw. Teildarstellungen eben anders dargestellt als die im peripheren Blickfeld liegenden Darstellungsbereiche bzw. Teildarstellungen.

Der zumindest eine Darstellungsort im Kraftfahrzeug kann jedoch auch ortsfest sein. Dann gilt für einen bestimmten Darstellungsort, dass sich die Darstellungsart wandeln kann, je nachdem, ob der Fahrzeugführer gerade den Darstellungsort im zentralen Blickfeld oder im peripheren Blickfeld hat. So kann eine Bildschirmanzeige mit starken Farbkontrasten arbeiten, solange der Fahrzeugführer dies im zentralen Blickfeld hat, und dann kann zu einer zeitlich veränderlichen Darstellung übergegangen werden, wenn die Darstellung in das periphere Blickfeld gerät, und umgekehrt.

Der Darstellungsort kann jedoch auch durch ein von einer Erfassungseinrichtung des Kraftfahrzeugs erfasstes Objekt außerhalb des Kraftfahrzeugs bestimmt werden, möglicherweise im Zusammenwirken auch mit der Blickrichtung. Zum Beispiel, wenn ein Fußgänger die Fahrbahn des Kraftfahrzeugs kreuzt, kann die Kontur des Fußgängers mittels einer Head-up-Anzeige auf die Windschutzscheibe projiziert werden, wobei sie aus Sicht des Fahrzeugführers den Fußgänger, also das reale Objekt, überdeckt. Die Kontur kann mit einer Zitterbewegung angezeigt werden, solange sie sich im peripheren Blickfeld des Fahrzeugführers befindet, und es kann zu einer nicht zitternden Farbdarstellung gewechselt werden, wenn der Fußgänger ins zentrale Blickfeld des Fahrzeugführers gerät. Letzteres kann dadurch geschehen, dass der Fahrzeugführer sich aufgrund der zitternden Bewegung der Darstellung dem Fußgänger zuwendet, oder dass der Fußgänger sich selbst weiterbewegt und auf diese Weise in das zentrale Blickfeld des Fahrzeugführers hineinläuft; beides kann selbstverständlich auch zusammenwirkend geschehen.

Das erfindungsgemäße Kraftfahrzeug weist eine Einrichtung zum Bereitstellen einer Darstellung auf, zum Beispiel einen Projektor zum Bereitstellen eines Head-up-Displays oder eine Reihe von Leuchtdioden, und es weist eine Einrichtung zum Erfassen einer Blickrichtung auf, zum Beispiel eine Kamera, die auf den Kopf des Fahrzeugführers gerichtet ist und in der Lage ist, die Blickrichtung zu erfassen; ggf. kann die Einrichtung zum Erfassen einer Blickrichtung auch eine Mehrzahl von Teileinrichtungen wie zum Beispiel mehrere Kameras umfassen. Das Kraftfahrzeug ist **dadurch gekennzeichnet, dass** die Einrichtung zum Bereitstellen einer Darstellung die bereitgestellte Darstellung von einem Darstellungsort aus zwei Darstellungsorten in Abhängigkeit davon auswählt, ob der jeweilige Darstellungsort in einem zentralen Blickfeld des Fahrzeugführers liegt oder in einem peripheren Blickfeld des Fahrzeugführers liegt. In der Einrichtung zum Bereitstellen einer Darstellung ist hierfür (also für die Auswahl) eine geeignete Steuereinrichtung in bestimmter Weise, z. B. durch Programmierung mit passender Software, geeignet ausgelegt.

Durch das erfindungsgemäße Kraftfahrzeug wird somit im Betrieb das erfindungsgemäße Verfahren umgesetzt. Die zum erfindungsgemäßen Verfahren genannten Vorteile gelten daher entsprechend für das erfindungsgemäße Kraftfahrzeug.

Entsprechend der bevorzugten Ausführungsform des erfindungsgemäßen Verfahrens ist auch bei einer bevorzugten Ausführungsform des Kraftfahrzeugs eine bestimmte Maßnahme vorgesehen: es wird nämlich eine Einrichtung zum Erfassen eines Objekts außerhalb des Kraftfahrzeugs bereitgestellt, und die Einrichtung zum Bereitstellen einer Darstellung ist ausgelegt (durch eine geeignete Programmierung ihrer Steuereinrichtung), einen jeweiligen Darstellungsort für die Darstellung anhand eines von der Einrichtung zum Erfassen erfassten Objekts zu bestimmen.

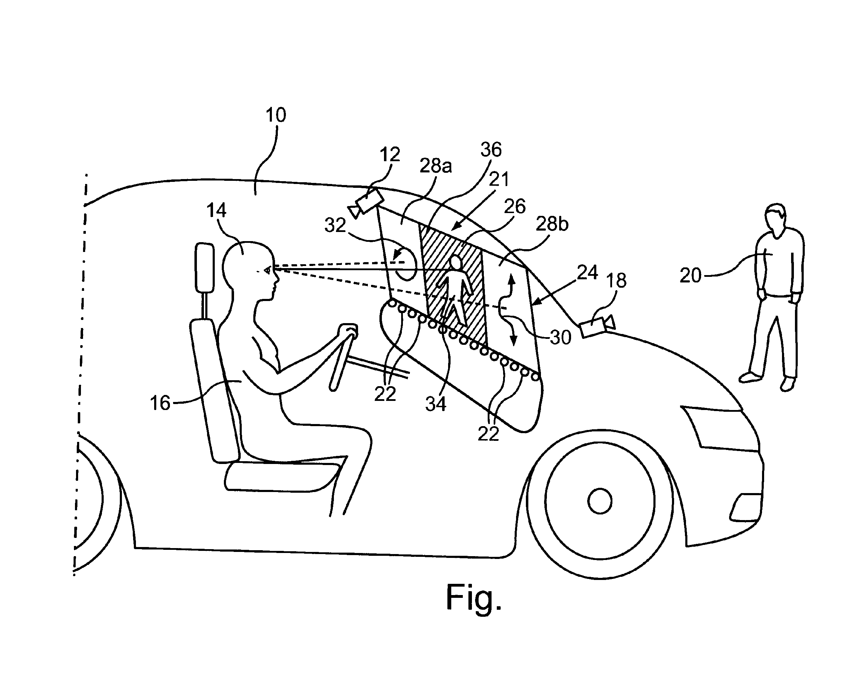

Nachfolgend wird eine bevorzugte Ausführungsform der Erfindung unter Bezug auf die Zeichnung näher beschrieben, in der die einzige Fig. 1 ein Kraftfahrzeug zeigt, bei dem die erfindungsgemäße Idee umgesetzt ist.

Ein im Ganzen mit 10 bezeichnetes Kraftfahrzeug weist zumindest eine Kamera 12 auf, die auf den Kopf 14 eines Kraftfahrzeugsführers 16 gerichtet ist und dadurch in der Lage ist, die Blickrichtung des Kraftfahrzeugführers 16 zu erfassen. Eine weitere Kamera 18 erfasst die Umgebung außerhalb des Kraftfahrzeugs, zum Beispiel einen Fußgänger 20. Im Kraftfahrzeug ist eine Reihe von Leuchtdioden 22 bereitgestellt, wobei diese zum Beispiel in Paaren von zwei Leuchtdioden vorgesehen sind, von denen die eine rot und die andere grün leuchtet. Ferner ist in dem Kraftfahrzeug 10 die Möglichkeit zur Bereitstellung eines Head-up-Displays 21 vorgesehen, also einer Darstellung auf einer Windschutzscheibe 24 des Kraftfahrzeugs.

Vorliegend soll durch eine Darstellung der Kraftfahrzeugführer 16 auf den Fußgänger 20 aufmerksam gemacht werden. Hierzu wird beständig die Blickrichtung mithilfe der Kamera 12 erfasst und erfasst, ob sich der Fußgänger 20 im zentralen Blickfeld 26 des Fahrzeugführers 16 befindet oder in einem der beiden peripheren Blickfelder (seitlichen Blickfelder) 28a und 28b, die dem zentralen Blickfeld 26 benachbart sind. Solange sich der Fußgänger 20 beispielsweise im peripheren Blickfeld befindet, können die Leuchtdioden 22, die dem peripheren Blickfeld 28b zugeordnet sind, zum Leuchten gebracht werden, oder eine Kontur des Fußgängers 20 kann wellenartig verstärkt werden, wie dies durch den Pfeil 30 angedeutet ist. Ähnliches gilt für das periphere Blickfeld 28a, zum Beispiel kann hier aber auch eine Kreisbewegung 32 vorgesehen sein, oder eine spiralförmige Bewegung von Bildpunkten auf der Windschutzscheibe 24.

Sobald der Fußgänger 20 nun ins zentrale Blickfeld 26 gerät, wird eine Kontur 34 des Fußgängers farblich besonders hervorgehoben, zum Beispiel in rot, und der Bereich 36 außerhalb der Kontur wird in einer Kontrastfarbe, beispielsweise in grün bereitgestellt. Die Darstellung ist naturgemäß derart, dass der Fahrzeugführer 16 noch durch die Windschutzscheibe 24 hindurch den Fußgänger 20 auch real sehen kann. Die Leuchtdioden 22 im Bereich, der dem zentralen Bereich 26 zugeordnet ist, können beständig in grün und rot leuchten.

Durch die vorgesehene Maßnahme, eine Darstellung im peripheren Blickfeld 28a, 28b eines Fahrzeugführers 16 anders zu gestalten, als wenn eine Darstellung für das zentrale Blickfeld 26 gegeben werden soll, kann den physiologischen Gegebenheiten des menschlichen Auges besonders gut Rechnung getragen werden: Das Auge nimmt nämlich in den peripheren Blickfeldern 28a, 28b Bewegungen besonders gut wahr, im zentralen Blickfeld 26 intensive Farben und insbesondere starke Farbkontraste.

## Patentansprüche

1. Verfahren zum Bereitstellen einer Darstellung (21) an zumindest einem Darstellungsort in einem Kraftfahrzeug (10), bei dem eine Blickrichtung eines Fahrzeugführers (16) erfasst wird und die Darstellung aus zumindest zwei Darstellungsarten in Abhängigkeit davon ausgewählt wird, ob der jeweilige Darstellungsort in einem zentralen Blickfeld (26) des Fahrzeugführers liegt oder in einem peripheren Blickfeld (28a, 28b) des Fahrzeugführers liegt.

2. Verfahren nach Anspruch 1,
**dadurch gekennzeichnet, dass**
wenn der Darstellungsort im zentralen Blickfeld (26) des Fahrzeugführers (16) liegt, die Darstellungsart intensive Farben und/oder Farbkontraste einsetzt.

3. Verfahren nach Anspruch 1 oder 2,
**dadurch gekennzeichnet, dass**
wenn der Darstellungsort im peripheren Blickfeld (28a, 28b) des Fahrzeugführers (16) liegt, die Darstellungsart eine zeitliche veränderliche Darstellung bereitstellt.

4. Verfahren nach einem der Ansprüche 1 bis 3,
**dadurch gekennzeichnet, dass**
die Blickrichtung des Fahrzeugführers den Darstellungsort von zumindest einer Darstellung bestimmt.

5. Verfahren nach einem der Ansprüche 1 bis 3,
**dadurch gekennzeichnet, dass**
der zumindest eine Darstellungsort im Kraftfahrzeug ortsfest ist.

6. Verfahren nach einem der Ansprüche 1 bis 3,
**dadurch gekennzeichnet, dass**
der Darstellungsort durch ein von einer Erfassungseinrichtung des Kraftfahrzeugs erfasstes Objekt (20) außerhalb des Kraftfahrzeugs bestimmt wird.

7. Kraftfahrzeug (10) mit einer Einrichtung (22) zum Bereitstellen einer Darstellung (21), und mit einer Einrichtung (12) zum Erfassen einer Blickrichtung eines Fahrzeugführers (16),
**dadurch gekennzeichnet, dass**
die Einrichtung zum Bereitstellen einer Darstellung die bereitgestellte Darstellung (21) an einem Darstellungsort aus zwei Darstellungsarten in Abhängigkeit davon auswählt, ob der Darstellungsort in einem zentralen Blickfeld (26) des Fahrzeugführers (16) liegt oder in einem peripheren Blickfeld (28a, 28b) des Fahrzeugführers liegt.

8. Kraftfahrzeug nach Anspruch 7,
**gekennzeichnet durch**
eine Einrichtung (18) zum Erfassen eines Objekts (20) außerhalb des Kraftfahrzeugs, wobei die Einrichtung zum Bereitstellen einer Darstellung einen jeweiligen Darstellungsort für die Darstellung anhand eines von der Einrichtung zum Erfassen erfassten Objekts (20) bestimmt.
